# FASCICULE DE BREVET EUROPEEN

(11) **EP 2 984 666 B1**
(45) Date de publication et mention de la délivrance du brevet: **03.04.2019**
(21) Numéro de dépôt: 14715926.3
(22) Date de dépôt: 08.04.2014
(51) Int. Cl.: H01G 11/40, H01G 11/56, H01G 11/32

(54) **ENSEMBLE ELECTRODE-ELECTROLYTE GEL COMPRENANT UN MATERIAU CARBONE POREUX ET OBTENU PAR POLYMÉRISATION RADICALAIRE**
ELEKTROLYT-GELELEKTRODE MIT PORÖSEM KOHLENSTOFFMATERIAL UND DURCH RADIKALISCHER POLYMERISATION HERGESTELLT
GEL-ELECTROLYTE MEMBRANE-ELECTRODE ASSEMBLY INCLUDING POROUS CARBON MATERIAL AND PRODUCED BY FREE RADICAL POLYMERIZATION

(30) Priorité: 10.04.2013 FR 1300828
(43) Date de publication de la demande: 17.02.2016
(73) Titulaire: THALES, 92400 Courbevoie (FR)
(72) Inventeur: LE BARNY, Pierre, 91797 Palaiseau Cedex (FR); DIVAY, Laurent, 91797 Palaiseau Cedex (FR); GALINDO, Christophe, 91797 Palaiseau Cedex (FR)
(74) Mandataire: Priori, Enrico
(86) Numéro de dépôt international: PCT/EP2014/057062
(87) Numéro de publication internationale: WO 2014/166952

(56) Documents cités:
- WO-A1-2012/129532
- US-A1- 2003 185 741
- US-A1- 2004 071 624
- US-B1- 6 205 016
- PIERRE LE BARNY ET AL: "Covalently functionalized single-walled carbon nanotubes and graphene composite electrodes for pseudocapacitor application", PROCEEDINGS OF SPIE, vol. 8814, 24 septembre 2013 (2013-09-24), page 88140I, XP055097426, ISSN: 0277-786X, DOI: 10.1117/12.2030011

## Description

L'invention concerne les composants pour le stockage d'énergie tels que des supercondensateurs. L'invention concerne plus particulièrement la passivation d'électrodes carbonées poreuses dans le but de réaliser des supercondensateurs ayant un électrolyte polymère gélifié obtenu par voie radicalaire.

Un supercondensateur ou condensateur électrochimique est un condensateur de technique particulière permettant d'obtenir des densités de puissance et d'énergie intermédiaires entre les batteries et les condensateurs électrolytiques classiques. La plupart des supercondensateurs comprend deux électrodes poreuses imprégnées d'électrolyte et séparées par une membrane isolante et poreuse permettant la circulation des ions contenus dans l'électrolyte.

Le principe de base des supercondensateurs repose sur les propriétés capacitives de l'interface entre les électrodes qui sont des conducteurs électroniques solides et l'électrolyte qui est un conducteur ionique liquide. Le stockage d'énergie s'effectue par la distribution des ions de l'électrolyte au voisinage de la surface de chaque électrode, sous l'influence de la différence de potentiel appliquée entre les deux électrodes. Il se crée ainsi aux interfaces une zone de charge d'espace, appelée double couche électrochimique, d'épaisseur limitée à quelques nanomètres. Les supercondensateurs sont donc des capacités à part entière. Le stockage d'énergie est de fait d'origine électrostatique, et non pas électrochimique comme dans le cas des accumulateurs, ce qui leur confère une puissance spécifique potentiellement élevée.

Classiquement, les supercondensateurs utilisent le carbone activé comme matériau d'électrode. Des recherches sont menées pour développer des électrodes à base de NTC, acronyme pour « NanoTubes de Carbone ». Les nanotubes de carbone présentent une conductivité électrique de l'ordre de 100 S.cm⁻¹, supérieure à la conductivité électrique du carbone activé qui est de l'ordre de 1S.cm⁻¹. Les nanotubes de carbone sont de mise en oeuvre facile, ils ne nécessitent pas l'utilisation de liant, par exemple. Par ailleurs, l'utilisation de feuilles de nanotubes de carbone, plus couramment connues sous le nom de « buckypaper », en langue anglaise, permet d'envisager la réalisation de supercondensateurs souples grâce à la cohésion mécanique des nanotubes de carbone entre eux dans un buckypaper.

Habituellement, les électrolytes utilisés sont basés sur l'emploi d'un sel d'ammonium quaternaire, tel que le tétrafluoroborate de tétraéthylammonium, dissous dans un solvant organique, typiquement l'acétonitrile ou le carbonate de propylène, ce qui potentiellement présente des risques importants de fuite du solvant en cas d'endommagement du supercondensateur.

Une amélioration permettant d'empêcher les risques de fuite consiste à réaliser des supercondensateurs tout solides, ou, en d'autres termes, des supercondensateurs comprenant un électrolyte solide c'est-à-dire des supercondensateurs comprenant un électrolyte qui ne coule pas.

Plusieurs voies sont explorées pour l'obtention d'un électrolyte solide :
Une voie consiste à réaliser un électrolyte polymère. On entend par électrolyte polymère : un polymère pouvant dissoudre un sel ou un liquide ionique ou un polymère synthétisé dans un liquide ionique.

Cette première voie permet d'associer des propriétés de conductivité ionique à un polymère.

Voici quelques exemples d'électrolytes polymères obtenus par dissolution d'un sel ou d'un liquide ionique dans un polymère :
- mélange de polyacrylonitrile ou de polyoxyéthylène ou d'alcool polyvinylique avec un liquide ionique, « A. Lewandowski, A. Swiderska, Solid State Ionics, 169 21-24, (2004*)»,*
- mélange d'alcool polyvinylique avec un acide phosphomolybdique, *«* Y. Zhang, X. Sun, L. Pan, H. Li, Z. Sun, C. Sun, B. K. Tay, J. of Alloys and Compounds, 480, L17-L19, (2009*)»,*
- mélange d'alcool polyvinylique ou polyétheréther cétone sulfoné avec un sel de lithium, « M. S. Kumar, D. K. Bhat, J. of Applied Polymer science, 114, 2445-2454, (2009*)».*

Voici quelques exemples d'électrolytes polymères obtenus par polymérisation radicalaire d'un monomère monofonctionnel en solution dans un liquide ionique :
- méthacrylate de méthyle ou acrylonitrile ou acétate de vinyle ou styrène ou méthacrylate de 2-hydroxy éthyl(HEMA) polymérisé en solution dans le 1-éthyl-3-méthylimidazonium tétrafluoroborate ou dans le 1-butylpyridinium, « A. Noda, M. Watanabe, Electrochimica Acta 45. 1265-1270, (2000*)»,*
- méthacrylate de méthyle ou acrylonitrile ou acétate de vinyle ou styrène ou méthacrylate de 2-hydroxy éthyl(HEMA) ou acrylate de méthyle ou acrylamide polymérisé en solution dans le 1-éthyl-3-méthyl imidazolium bis(trifluorométhane sulfonyl)imide (EMITFSI), » M. A. B. H. Susan, T. Kaneko, A. Noda, and M. Watanabe, J. AM. CHEM. SOC., 127, 4976-4983, (2005*) ».*

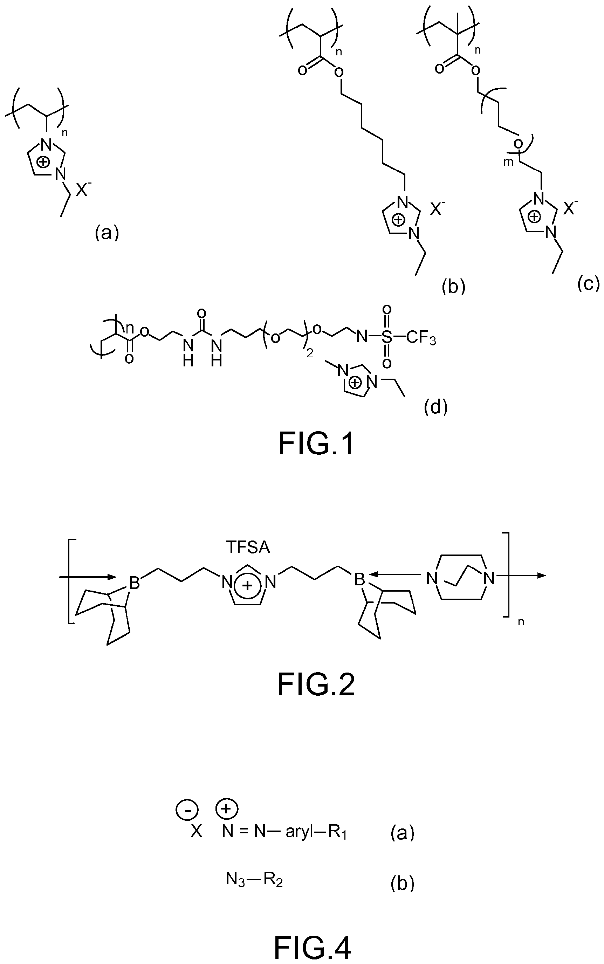

Une autre voie consiste à mettre en oeuvre des polymères portant des fonctions ioniques, principalement de type liquide ionique tels que les polymères figures 1a à 1d, pour lesquels la charge est portée par les chaînes latérales de la macromolécule :
(a) sel de poly(1-vinyl-3-ethylimidazolium),
(b) sel de poly(1-(6-(acryloyloxy)hexyl)-3-éthylimidazolium,
(c) polymère liquide ionique à chaine latérale dérivé d'un méthacrylate et portant un groupement 3-éthylimidazolium comme cation,
(d) polymère liquide ionique à chaîne latérale, fonctionnalisé par un anion trifluorométhane sulfonimide et ayant le 1,3-éthylméthylimidazolium comme contre ion.

La figure 2 représente un polymère, obtenu par auto assemblage d'un liquide ionique diborylé avec le 1,4-diazabicyclo[2.2.2]octane, pour lequel la charge est portée par le squelette de la macromolécule.

Dans cette deuxième voie, les propriétés conductrices ioniques sont intrinsèques au polymère, elles sont assurées par les fonctions ioniques portées par le polymère.

Les voies développées ci-dessus permettent de réaliser des électrolytes solides, cependant les conductivités ioniques obtenues n'atteignent pas les performances souhaitées en terme de puissance.

Une troisième voie nécessitant des réseaux de polymères formés en présence d'un électrolyte liquide est envisagée.

Le réseau de polymère piège une grande quantité d'électrolyte liquide formant ainsi un réseau biphasique pouvant s'apparenter à un solide.

Cette voie de développement permet de s'affranchir des problèmes de fuite. De plus, la fraction massique de réseau de polymère est faible, l'électrolyte étant majoritairement constitué d'une phase liquide. L'importante quantité de phase liquide permet une augmentation significative de la conductivité ionique par rapport aux conductivités ioniques obtenues par les voies décrites précédemment.

Les gels obtenus par création de liaisons faibles entre le polymère et la phase liquide sont appelés des gels physiques. Il existe deux modes opératoires de synthèse de ces gels physiques.

Un premier mode opératoire consiste à dissoudre un polymère tribloc de type ABA dans un solvant sélectif du bloc B, par exemple. Voici quelques exemples de solutions pouvant former des gels physiques selon cette méthode :
- poly(styrène-bloc-éthylèneoxyde-bloc-styrène) (SOS) dissous dans le 1-butyl-3-méthylimidazolium hexafluorophosphate ([BMIM][PF6]), le ([BMIM][PF6]) étant un liquide ionique solvant du polyéthylène oxyde, « Yiyong He, Paul G. Boswell, Philippe BOhlmann, and Timothy P. Lodge, J. Phys. Chem. B, 111, 4645-4652, (2007*)»,*
- poly(styrène-bloc-méthyl méthacrylate-bloc-styrène) triblock copolymère dissous dans le 1-éthyl-3-méthylimidazolium bis-(triflurométhyl sulfonyl) imide [EMI][TFSI], *«* Keun Hyung Lee, Sipei Zhang, Timothy P. Lodge, and C. Daniel Frisbie, J. Phys. Chem. B, 115,3315-3321, (2011*)" et "*Keun Hyung Lee, Moon Sung Kang, Sipei Zhang, Yuanyan Gu, Timothy P. Lodge, and C.Daniel Frisbie, Adv. Mater., 24,4457-4462, (2012*)".*

Un deuxième mode de préparation des gels consiste en l'évaporation d'un mélange comprenant un solvant et un non solvant dans lequel sont dissous deux polymères ayant des solubilités différentes. L'évaporation du non-solvant crée des micropores qui dans une deuxième étape sont remplis par une solution d'électrolyte dans un solvant organique. Voici un exemple de solution pouvant former un gel physique selon cette autre méthode :
- le polyfluorure de vinylidène (PVDF) et le polyméthyl méthacrylate (PMMA) comme polymères, le diméthyl formamide (DMF) comme solvant et la glycérine comme non solvant, LiPF₆ dans un mélange de carbonate de diméthyle et de carbonate d'éthylène comme électrolyte liquide.

Par ailleurs, en introduisant de la silice finement divisée dans une solution d'acide sulfurique on obtient un gel physique grâce aux liaisons hydrogène qui se créent entre les grains de silice et entre les grains de silice et la solution d'acide sulfurique, « J.M. Ko, RY. Song, H.J. Yu, J.W. Yoon, B.G. Min, D.W. Kim, Electrochimica Acta, 5O 873-876, (2004*).*

Les gels dits « physiques » sont par essence réversibles, et, par conséquent, peu stables. Plusieurs voies de recherche ont permis de développer des gels irréversibles par réticulation du réseau polymère. Voici quelques exemples :
- réaction d'un polyéthylène glycol fonctionnalisé par des groupements amines avec un polyéthylène glycol terminé par des fonctions succinimides en présence d'un liquide ionique, « Marc A. Klingshirn, Scott K. Spear, Raman Subramanian, John D. Holbrey, Jonathan G. Huddleston, and Robin D. Rogers, Chem. Mater. 16, 3091-3097, (2004*) ».*
- réticulation d'une résine époxy en présence d'un liquide ionique, « Kozo Matsumoto and Takeshi Endo, Macromolecules, 41,6981-6986, (2008*) »*
- réticulation d'un mélange d'acrylamide (monomère monofonctionnel) avec du N, N'-methylene-bis-acrylamide (monomère bifonctionnel) et de l'acrylamide 2-méthylpropane sulfonique acide (monomère monofonctionnel) par l'eau oxygénée en présence de LiClO₄, « B. Ganesh, D. Kalpana, N. G. Renganathan, Ionics, 14, 339-343, (2008*) »,*
- réticulation par faisceau d'électrons d'un mélange de polyoxyéthylène et de polyéthylèneglycol diacrylate (PEGDA) en présence d'un liquide ionique (LITFSI), « R. Uchiyama, K. Kusagawa, K. Hanai, N. Imanishi, A. Hirano, Y. Takeda, Solid State lonics 180, 205-211, (2009*) »,*
- réticulation photochimique de 1,6-hexanediol diacrylate (HDDA) en présence d'un liquide ionique solubilisé dans un oligomère de polyéthylène glycol diméthyl éther (PEGDME), « Da Qin, Yiduo Zhang, Shuqing Huang, Yanhong Luo, Dongmei Li, Qingbo Meng, Electrochimica Acta 56, 8680-8687, (2011*) »,*
- réticulation d'un copolymère butadiène acrylonitrile terminé par des fonctions amine-(ATBN) avec un polyhedral oligomerique silsesquioxane (POSS) fonctionnalisé par des groupes époxycyclohexyl, « Ming Li, Wentan Ren, Yong Zhang, Yinxi Zhang, Journal of Applied Polymer Science, 126, 273-279, (2012*) »,*
- réaction d'addition de Michaël entre une molécule portant quatre fonctions thiol et un mélange d'acrylates di et trifonctionnels, Devatha P. Nair, Neil B. Cramer, John C. Gaipa, Matthew K. McBride, Emily M. Matherly, Robert R. McLeod, Robin Shandas, and Christopher N. Bowman, Adv. Funct. Mater., 22, 1502-1510, (2012*) ».*

Les voies décrites pour l'obtention de gels par réticulation de composés organiques ne permettent qu'un choix limité des composés organiques pouvant être mis en oeuvre. De plus, l'utilisation de polymères fonctionnalisés de grandes tailles interdit leur imprégnation dans les pores des matériaux carbonés.

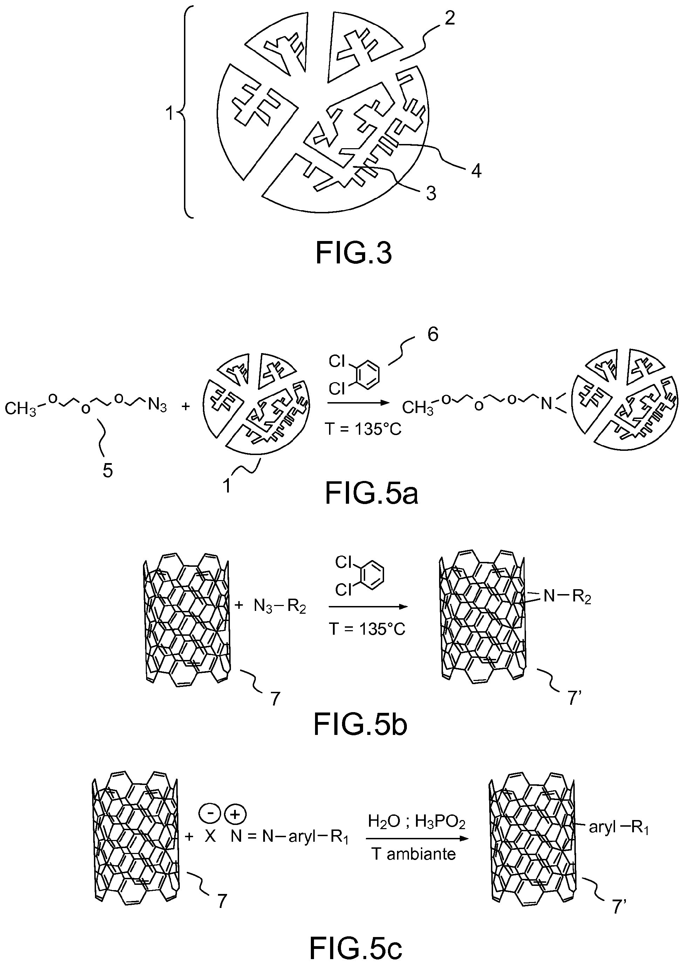

En effet, comme l'indique la figure 3, la surface d'un matériau carboné 1 comprend des macropores 2 de taille supérieure à 50nm, des mésopores 3 de taille comprise entre 2 et 50nm et des micropores 4 de tailles inférieures à 2nm. On comprend aisément que des monomères de tailles trop importantes ne peuvent pas s'insérer à l'intérieur de tous les pores du matériau carboné 1. Un exemple de surface de matériau carbonée poreux est divulgué dans la publication de Pierre Le Barny *et al.* (Pierre Le Barny et al.: « Covalently functionalized single-walled carbon nanotubes and graphène composite electrodes for pseudocapacitor application", Proceedings of SPIE, vol. 8814, 24 septembre 2013 (2013-09-24), page 88140I, XP055097426, ISSN: 0277-786X, DOI: 10.1117/12.2030011). Le document WO2012/129532A1 décrit un condensateur à écoulement continu à électrodes polarisées qui comprend au moins un matériau d'électrode carboné. Par ailleurs, le document indique une méthode pour introduire des groupes ioniques dans le volume des pores de l'électrode, méthode qui consiste à attacher fermement des groupes ioniques aux surfaces des pores microscopiques de l'électrode par des liaisons covalentes. Le document US2004/071624A1 décrit des procédés pour la modification chimique de nanotubes de carbone. Ces procédés impliquent la fonctionnalisation de nanotubes de carbone avec des sels de diazonium. Le procédé permet la fixation chimique d'une variété de composés organiques sur le côté et les extrémités de nanotubes de carbone, qui peuvent être utilisé dans la réalisation d'électrodes pour composant électroniques.

Les échanges entre le matériau carboné et le gel formé à partir des macromolécules de grandes tailles ne sont pas très bons ce qui diminue la capacité spécifique des supercondensateurs qui utilisent des électrodes à base de matériau carboné.

Une autre voie consiste à polymériser un mélange de monomères monofonctionnels et polyfonctionnels dissous dans un liquide conducteur ionique par polymérisation radicalaire amorcée thermiquement. La polymérisation étant réalisée *in situ* en présence du matériau d'électrode. Le liquide conducteur ionique pouvant être un liquide ionique, un solvant aqueux ou organique.

Cette voie présente les avantages suivants :
- elle permet d'obtenir un électrolyte solide qui ne coule pas,
- elle permet l'utilisation de monomères précurseurs de faibles tailles permettant leur imprégnation au sein des micropores 4 du matériau carboné,
- elle permet un meilleur contrôle du temps d'imprégnation, la réticulation étant amorcée par chauffage.

Ces avantages permettent de créer un bon contact entre le matériau carboné et le gel permettant ainsi d'obtenir une capacité spécifique du supercondensateur du même ordre de grandeur que celle obtenue avec un électrolyte liquide.

Toutefois, il faut noter que les matériaux carbonés empêchent la réticulation des monomères.

En effet, certains matériaux carbonés présentent des sites qui sont des pièges de radicaux libres ou en d'autres termes, les matériaux carbonés présentent des sites de capture des radicaux libres.

Les radicaux libres formés lors de l'amorçage de la réaction de réticulation des monomères sont alors fixés ou « pris au piège » sur ces sites. Cette fixation des radicaux inhibe la réaction de réticulation *in situ* des monomères. Il devient alors impossible de former un gel par voie radicalaire amorcée thermiquement en présence d'un matériau comprenant du carbone activé poreux.

L'invention se propose donc de réaliser une réaction de réticulation amorcée thermiquement d'un mélange de monomères *in situ* en présence d'un matériau carboné poreux par voie radicalaire.

Selon un aspect de l'invention, il est proposé un procédé d'élaboration d'un ensemble électrode-électrolyte gel à base de matériau carboné poreux comprenant des sites piégeurs de radicaux, comprenant:
- une étape de formation d'une liaison entre les sites piégeurs de radicaux du matériau carboné et des molécules de fonctionnalisation
- une étape de préparation d'une solution comprenant au moins un monomère monofonctionnel et au moins un monomère polyfonctionnel, un électrolyte conducteur ionique et un amorceur radicalaire. L'électrolyte peut être une solution aqueuse d'un sel ou une solution d'un sel organique dans un solvant organique, ou un liquide ionique.
- une étape d'imprégnation de la solution desdits monomères à l'intérieur des pores du matériau carboné, et
- une étape de polymérisation *in situ* desdits monomères par voie radicalaire.

Les sites piégeurs ou de fixation des radicaux sont masqués par les molécules de fonctionnalisation. En d'autres termes, les sites piégeurs sont rendus inertes vis-à-vis des radicaux formés lors de la réaction de réticulation, le matériau carboné est dit « passivé ».

Avantageusement, les molécules de fonctionnalisation forment une liaison avec les sites piégeurs de radicaux via un groupement azide ou un sel de diazonium situés sur les molécules de fonctionnalisation. Les molécules de fonctionnalisation comprennent par ailleurs des groupements permettant de modifier les propriétés de surface du matériau carboné, tels que des groupements oxyéthylène qui améliorent l'interaction entre le matériau carboné et un électrolyte aqueux constitué du polymère gélifié.

L'étape de formation d'une liaison entre le matériau carboné et les molécules de fonctionnalisation via un sel de diazonium est réalisée à température ambiante, et, comprend les sous-étapes suivantes :
- Réduction du sel de diazonium en présence d'acide hypophosphoreux pour former un radical libre,
- Addition du radical libre sur le matériau carboné.

L'étape de formation d'une liaison entre le matériau carboné et les molécules de fonctionnalisation via un groupement azide est réalisée à environ 135°C dans une atmosphère comprenant un gaz neutre.

Avantageusement, la molécule de fonctionnalisation est du 1-azido-[2'-(2-méthoxyéthoxy)éthyl]éthane. Ce composé est connu pour ses bonnes propriétés de mouillabilité permettant ainsi d'améliorer l'interaction entre le matériau carboné et le gel polymère-électrolyte si celui-ci est aqueux, formé par réticulation des monomères, servant respectivement d'électrode et d'électrolyte à un supercondensateur.

Avantageusement, la solution de monomères comprend de l'acrylamide, du N, N'-méthylènebisacrylamide en présence d'un amorceur de polymérisation radicalaire et d'une solution aqueuse de sel, l'amorceur radicalaire étant du persulfate d'ammonium. Avantageusement, l'amorceur peut être associé à un co-amorceur de polymérisation radicalaire, tel que le N, N, N', N'-tétraméthyléthylènediamine.

Selon un autre aspect de l'invention, il est proposé un supercondensateur comprenant un ensemble électrode - électrolyte gel élaboré selon le procédé décrit précédemment.

La « fonctionnalisation » ou la « passivation » du matériau carboné consiste, au sens de l'invention, à rendre inertes les sites piégeurs de radicaux libres en y associant des molécules de faibles masses molaires par formation d'un liaison chimique. Les sites piégeurs sont ainsi inhibés, ils sont dans l'incapacité de piéger les radicaux libres libérés lors de la réaction de réticulation des monomères.

Il devient alors possible de réaliser un électrolyte solide en présence d'un matériau carboné poreux présentant des sites piégeurs de radicaux permettant ainsi d'améliorer la surface active d'un supercondensateur comprenant un ensemble électrode-électrolyte gel réalisé selon l'invention.

L'invention sera mieux comprise et d'autres avantages apparaîtront à la lecture de la description qui va suivre donnée à titre d'exemple et grâce aux figures annexées parmi lesquelles :
- les figures 1a, 1b, 1c et 1d, déjà décrites, représentent des polymères utilisés comme électrolyte solide, et, pour lesquels les fonctions ioniques sont portées par une chaîne latérale, selon l'art connu,
- la figure 2, déjà décrite, représente un polymère utilisé comme électrolyte solide pour lequel la fonction ionique est portée par le squelette principal, selon l'art connu,
- la figure 3, déjà décrite, représente schématiquement un matériau carboné 1 comprenant des macropores 2, des micropores 4 et des mésopores 3, selon l'art connu,
- les figures 4a et 4b représentent respectivement un sel de diazonium et un groupement azide,
- la figure 5a représente la réaction de formation d'une liaison chimique entre un matériau carboné poreux et un groupement azide, selon un aspect de l'invention,
- les figures 5b et 5c représentent respectivement : la réaction de formation d'une liaison chimique entre un nanotube de carbone et un groupement azide et la réaction de formation d'une liaison chimique entre un nanotube de carbone et un sel de diazonium, selon un aspect de l'invention,
- la figure 6 représente la réaction de préparation d'une molécule 5 comprenant un groupement azide, et
- la figure 7 représente un erlenmeyer maintenu à l'envers et comprenant un gel d'électrolyte polymère solide en présence de carbone activé, selon un aspect de l'invention.

De manière à permettre la réticulation des macromolécules par voie radicalaire en présence d'un matériau carboné, les sites piégeurs de radicaux libres sont fonctionnalisés. Les sites piégeurs de radicaux libres sont associés avec des molécules de faibles masses molaires comprenant des sels de diazonium, tel que représenté sur la figure 4a, ou des groupements azides, tel que représenté sur la figure 4b. Les sites deviennent alors indisponibles pour le piégeage des radicaux libres libérés lors de l'amorçage de la réaction de réticulation des monomères monofonctionnels et polyfonctionnels par voie radicalaire.

La figure 5a représente la réaction de formation d'une liaison chimique entre le matériau carboné et les molécules de fonctionnalisation, c'est à dire réaction de fonctionnalisation du matériau carboné par des molécules de faible masse molaire. En l'espèce, il s'agit de l'association d'un azide 5 sur un matériau comprenant du carbone activé 1.

Dans l'exemple choisi, l'azide est du 1-azido-[2'-(2"méthoxyéthoxy)éthyl]éthane 5. La réaction de fonctionnalisation ou de formation de la liaison chimique est réalisée en présence de 1,2-dichlorobenzène 6 à une température de 135°C en atmosphère neutre.

Le produit obtenu est du carbone activé 1 comprenant du 1-azido-[2'-(2"-méthoxyéthoxy)éthyl]éthane 5, l'azide 5 étant lié à la surface du carbone activé mais aussi à la surface de l'intérieur des pores 2, 3, 4 du carbone activé 1. La faible masse molaire des molécules associées au matériau carboné 1 permet la fonctionnalisation de l'intérieur des pores du carbone activé.

Les figures 5b et 5c représentent respectivement :
- la réaction de formation d'une liaison entre les nanotubes de carbone 7 et une molécule de fonctionnalisation comprenant un groupement azide, la réaction étant réalisée en présence de dichlorobenzène et à une température sensiblement égale à 135°C sous atmosphère neutre, et
- la réaction de formation d'une liaison entre les nanotubes de carbone 7 et une molécule de fonctionnalisation comprenant un sel de diazonium, la réaction étant réalisée en présence d'acide hypophosphoreux à température ambiante.

### Exemple d'un mode opératoire : fonctionnalisation d'un échantillon de carbone activé par le 1-azido-[2'-(2"méthoxy)éthyl]éthane.

Le carbone activé est produit à partir de matières organiques végétales riches en carbone et se caractérise par une structure poreuse à l'intérieur de laquelle coexistent des micropores 4, des mésopores 3 et des macropores 2, la surface spécifique de ce type de matériau pouvant atteindre 3000m²/g.

Dans une première étape, la molécule à greffer est synthétisée, en l'espèce la molécule est le 1-azido-[2'-(2"méthoxy)éthyl]éthane 5. Alternativement, d'autres molécules peuvent être choisies, telles que des 1-azido-alcanes, des azido benzène substitués, des liquides ioniques fonctionnalisés par une fonction azide.

Le mode opératoire de la synthèse du 1-azido-[2'-(2"méthoxy)éthyl]éthane est décrit ci-après.

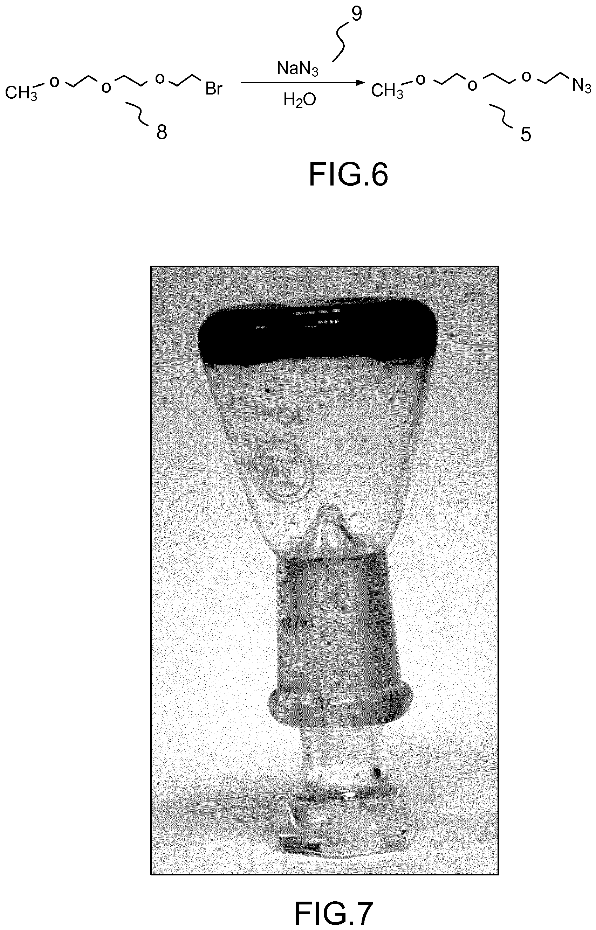

Le 1-azido-[2'-(2"-méthoxy)éthyl]éthane 5 est obtenu en une étape à partir de 1-bromo-[2'-(2"-méthoxyéthoxy)éthyl]éthane 8 par substitution nucléophile de l'atome de brome par l'azoture de sodium 9, cette réaction étant représentée sur la figure 6 selon le protocole expérimental décrit ci-après. Dans un ballon de 100mL, on dissout 1,96g soit 8,63 mmoles de 1-bromo-[2'-2"-méthoxyéthoxy)éthyl]éthane 8 dans une solution de 2,07g soit 31,84mmoles d'azoture de sodium 9 dans 24 mL d'eau. On chauffe à reflux pendant 21h. On laisse le milieu réactionnel revenir à température ambiante et on extrait 5 fois au dichlorométhane. Les phases organiques sont rassemblées, séchées sur du sulfate de magnésium et évaporées à sec avec un évaporateur rotatif. On obtient 1,47g d'azide 5 sous forme de liquide incolore. Le rendement est de 90%.

Dans une deuxième étape, le 1-azido-[2'-(2"méthoxy)éthyl]éthane 5 est greffé sur du carbone activé 1 de type HDLC30 c'est à dire qu'une liaison chimique est créée entre le carbone activé poreux 1 et le 1-azido-[2'-(2"méthoxy)éthyl]éthane 5, selon le mode opératoire décrit ci-après.

On disperse 80 mg de carbone activé 1 HDLC30 dans 70mL de 1,2 dichlorobenzène par un traitement de 3h aux ultras-sons. La dispersion de carbone activé 1 ainsi obtenue est introduite dans un ballon tricol de 250mL. Sous balayage d'argon, on ajoute goutte à goutte une solution de 210mg d'azide 5 dissous dans 1 mL de 1,2-dichlorobenzène. Le milieu réactionnel est chauffé à 135°C sous argon pendant 24h.

Un solide noir est séparé par filtration sur filtre Sartorius Stedium (PTFE, 0,45µm), lavé au chloroforme, puis à l'acétone et au diéthyléther. Enfin, le solide est séché sous vide à 50°C. On obtient 75,3mg de carbone activé lié au 1-azido-[2'-(2"méthoxy)éthyl]éthane 5.

Cette réaction permet de rendre les sites piégeurs de radicaux inertes, ou en d'autres termes, de passiver le carbone activé 1.

De manière à mettre en évidence l'inhibition des sites piégeurs de radicaux libres et ainsi de montrer la faisabilité de la gélification *in situ* d'un gel de polymère-électrolyte en présence d'un matériau à base de carbone, un test est réalisé : 230mg de carbone activé 1 modifié par l'azide 5 sont mis en suspension dans une solution S qui après réticulation par voie radicalaire conduit à un électrolyte polymère formant un gel à base de nitrate de lithium 3M. Cette solution S est composée de :
- 100mg d'acrylamide qui est un monomère monofonctionnel,
- 10mg de N, N'-méthylènebisacrylamide qui est un monomère di-fonctionnel
- 5mg de persulfate d'ammonium qui est un amorceur radicalaire
- 414g de nitrate de lithium servant d'électrolyte, et
- 2mL d'eau.

L'addition d'une goutte de N, N, N', N'-tétraméthyléthylènediamine, qui est un co-amorceur de la polymérisation radicalaire, à la solution S précédente conduit en quelques secondes à la formation d'un gel.

La figure 7 est une photo d'un gel d'électrolyte-polymère formé en présence d'un matériau carboné selon l'invention.

Ce test montre bien que les sites piégeurs sont rendus inertes, ils ne piègent plus les radicaux formés lors de la réaction de réticulation des monomères.

La photo de la figure 7 représente le gel d'électrolyte polymère réticulé in situ par voie radicalaire en présence d'un matériau carboné comprenant des pores et des sites piégeurs de radicaux. L'erlenmeyer dans lequel est contenu l'ensemble électrode-électrolyte gel selon l'invention est complètement retourné, l'ensemble formé ne coule pas ce qui montre que le gel polymère est complètement réticulé, toute la solution conductrice ionique, en l'espèce le nitrate de lithium est piégée à l'intérieur des polymères réticulés.

### Exemple d'un mode opératoire : fonctionnalisation d'un échantillon de nanotube de carbone multi feuillet par le 1-azido-[2'-(2"méthoxy)éthyl]éthane.

Dans une première étape, la molécule est synthétisée, en l'espèce la molécule à greffer est le 1-azido-[2'-(2"méthoxy)éthyl]éthane 5, comme précédemment.

Dans une deuxième étape, le 1-azido-[2'-(2"méthoxy)éthyl]éthane 5 est greffé sur les nanotubes de carbone 7, selon le mode opératoire décrit ci-après.

240mg de nanotubes multi feuillets (Aldrich) sont dispersés dans 210mL de 1,2 dichlorobenzène par un traitement de 3h aux ultra sons.

La dispersion de nanotubes de carbone 7 ainsi obtenue est introduite dans un ballon tricol de 500mL. Une solution de 630mg d'azide (3,33mmoles) dans 5mL de 1,2-dichlorobenzène est ajoutée goutte à goutte à la dispersion de nanotubes de carbone sous un flux d'argon. Le milieu réactionnel est chauffé à 135°C sous argon pendant 24h.

Un solide noir est séparé par centrifugation (3000 tours/min) et lavé deux fois avec le tétrahydrofurane. Le solide est isolé par filtration sur un filtre Sartorius (PTFE, 0,45µm) lavé à l'acétone puis au diéthyléther et séché sous vide à 50°C pendant 36h, puis à 80°C pendant 3h. On obtient 0,285mg de nanotubes de carbone 7' modifiés chimiquement par l'azide 5.

### Préparation d'un électrode de buckypaper à partir des nanotubes de carbone chimiquement modifiés par le 1-azido-[2'(2"méthoxy)éthyl]éthane.

On disperse 30mg de nanotubes de carbone 7' modifiés chimiquement par des molécules de type 1-azido-[2'(2"méthoxy)éthyl]éthane 5 dans 90mL de N-méthyl-2-pyrrolidone (NMP) en plaçant la mélange dans un bain à ultra sons pendant 3heures. Afin d'éliminer les particules en suspension, on centrifuge la dispersion (3000 tours/min). La dispersion est ensuite filtrée sur un filtre en alumine « anodisc 25 » de chez Whatman de porosité 0,2µm. Le buckypaper formé sur le filtre est lavé à l'acétone et au diéthyléther. Enfin, il est séché sous vide à 50°C. On obtient une électrode de 17mm de diamètre. Deux électrodes sont ainsi préparées.

### Réalisation et caractérisation du supercondensateur

Les « buckypapers » obtenus précédemment sont découpés à l'aide d'un emporte pièce pour former des électrodes d'un diamètre de 16mm. Un séparateur est disposé entre les deux électrodes, le séparateur est un disque à base de cellulose.

L'ensemble est imprégné d'une solution S comprenant les monomères monofonctionnels et polyfonctionnels, l'amorceur radicalaire et l'électrolyte conducteur ionique. Le supercondensateur est ensuite chauffé pendant 12h afin de permettre la formation du gel.

La capacité spécifique d'un supercondensateur comprenant des collecteurs en or lorsqu'on applique un courant de 10 mA est de 6F.g⁻¹ et une résistance série de 2,75ohms. Cette capacité est du même ordre de grandeur que celle obtenue avec un électrolyte liquide et supérieure à celle obtenue avec un électrolyte solide réalisé selon les voies de synthèse proposées dans la littérature.

## Revendications

1. Procédé d'élaboration d'un ensemble électrode-électrolyte gel à base de matériau carboné poreux comprenant des sites piégeurs de radicaux **caractérisé en ce qu'**il comprend:
- une étape de formation d'une liaison entre les sites piégeurs de radicaux du matériau carboné (1) et des molécules de fonctionnalisation (5),
- une étape de préparation d'une solution (S) comprenant au moins un monomère monofonctionnel et au moins un monomère polyfonctionnel, un liquide ionique et un amorceur radicalaire,
- une étape d'imprégnation de la solution (S) desdits monomères à l'intérieur des pores (2, 3, 4) du matériau carboné (1), et
- une étape de polymérisation *in situ* desdits monomères par voie radicalaire.

2. Procédé selon la revendication 1 dans lequel les molécules de fonctionnalisation (5) forment une liaison avec les sites piégeurs de radicaux du matériau carboné (1) via un groupement azide ou un sel de diazonium.

3. Procédé selon l'une des revendications 1 ou 2 dans lequel l'étape de formation d'une liaison entre le matériau carboné (1) et les molécules de fonctionnalisation (5) via un sel de diazonium est réalisée à température ambiante, et, comprend les sous-étapes suivantes :
- réduction du sel de diazonium en présence d'acide hypophosphoreux pour former un radical libre,
- addition du radical libre sur le matériau carboné.

4. Procédé selon l'une des revendications 1 ou 2 dans lequel l'étape de formation d'une liaison entre le matériau carboné (1) et les molécules de fonctionnalisation (5) via un groupement azide est réalisée à environ 135°C dans une atmosphère comprenant un gaz neutre.

5. Procédé selon la revendication 3 dans lequel la molécule de fonctionnalisation (5) est du 1-azido-[2'-(2-méthoxyéthoxy)éthyl]éthane.

6. Procédé selon l'une des revendications 1 à 5 dans lequel la solution (S) de monomères comprend de l'acrylamide, du N, N'-méthylènebisacrylamide en présence d'un amorceur de polymérisation radicalaire et d'un liquide ionique.

7. Procédé selon la revendication 5 dans lequel l'amorceur radicalaire est du persulfate d'ammonium.

8. Procédé selon l'une des revendications 1 à 6 dans lequel la solution (S) de monomères comprend en outre un co-amorceur de polymérisation radicalaire, le co-amorceur étant le N, N, N', N'-tétraméthyléthylènediamine.

9. Supercondensateur **caractérisé en ce qu'**il comprend un ensemble électrode-électrolyte gel élaboré selon le procédé selon l'une des revendications 1 à 8.

## Patentansprüche

1. Verfahren zum Herstellen einer Elektrode-und-Elektrolytgel-Anordnung auf der Grundlage eines porösen, kohlenstoffhaltigen Materials, welches Radikalfängerstellen beinhaltet, **dadurch gekennzeichnet, dass** es folgende Schritte beinhaltet:
- einen Schritt des Bildens einer Verbindung zwischen den Radikalfängerstellen des kohlenstoffhaltigen Materials (1) und den Funktionalisierungsmolekülen (5),
- einen Schritt der Vorbereitung einer Lösung (S), welche mindestens ein monofunktionales Monomer und mindestens ein polyfunktionales Monomer, eine ionische Flüssigkeit und einen Radikalinitiator beinhaltet,
- einen Schritt des Imprägnierens der Lösung (S) aus den Monomeren im Innern der Poren (2, 3, 4) des kohlenstoffhaltigen Materials (1), und
- einen Schritt der radikalischen *in situ*-Polymerisierung der Monomere.

2. Verfahren nach Anspruch 1, bei welchem die Funktionalisierungsmoleküle (5) eine Verbindung mit den Radikalfängerstellen des kohlenstoffhaltigen Materials (1) über eine Azidgruppe oder ein Diazoniumsalz bilden.

3. Verfahren nach einem der Ansprüche 1 oder 2, bei welchem der Schritt des Bildens einer Verbindung zwischen dem kohlenstoffhaltigen Material (1) und den Funktionalisierungsmolekülen (5) über ein Diazoniumsalz bei Raumtemperatur erfolgt und folgende Unterschritte beinhaltet:
- Reduktion des Diazoniumsalzes in Gegenwart von hypophosphoriger Säure zum Bilden eines freien Radikals,
- Hinzufügen des freien Radikals zu dem kohlenstoffhaltigen Material.

4. Verfahren nach einem der Ansprüche 1 oder 2, bei welchem der Schritt des Bildens einer Verbindung zwischen dem kohlenstoffhaltigen Material (1) und den Funktionalisierungsmolekülen (5) über eine Azidgruppe bei ungefähr 135 °C in einer Atmosphäre erfolgt, welche ein neutrales Gas beinhaltet.

5. Verfahren nach Anspruch 3, bei welchem das Funktionalisierungsmolekül (5) 1-Azido-[2'-(2-methoxyethoxy)ethyl]ethan ist.

6. Verfahren nach einem der Ansprüche 1 bis 5, bei welchem die Lösung (S) aus Monomeren Acrylamid, N, N'-Methylenbisacrylamid in Gegenwart eines Radikal-Polymerisationsinitiators und einer ionischen Flüssigkeit beinhaltet.

7. Verfahren nach Anspruch 5, bei welchem der Radikalinitiator Ammoniumpersulfat ist.

8. Verfahren nach einem der Ansprüche 1 bis, bei welchem die Lösung (S) aus Monomeren zudem einen Radikal-Polymerisations-Coinitiator beinhaltet, wobei der Coinitiator N, N, N', N'-Tetramethylethylendiamin ist.

9. Superkondensator, **dadurch gekennzeichnet, dass** er eine Elektrode-und-Elektrolytgel-Anordnung beinhaltet, welche nach dem Verfahren nach einem der Ansprüche 1 bis 8 hergestellt wurde.

## Claims

1. A process for producing an electrode-gel electrolyte assembly based on porous carbonaceous material comprising radical-trapping sites, **characterized in that** it comprises:
- a step of forming a bond between the radical-trapping sites of the carbonaceous material (1) and functionalizing molecules (5),
- a step of preparing a solution (S) comprising at least one monofunctional monomer and at least one polyfunctional monomer, an ionic liquid and a radical initiator,
- a step of impregnating the solution (S) of said monomers into the pores (2, 3, 4) of the carbonaceous material (1), and
- a step of *in situ* radical polymerization of said monomers.

2. The process according to claim 1, wherein the functionalizing molecules (5) form a bond with the radical-trapping sites of the carbonaceous material (1) via an azide group or a diazonium salt.

3. The process according to one of claims 1 or 2, wherein the step of forming a bond between the carbonaceous material (1) and the functionalizing molecules (5) via a diazonium salt is carried out at ambient temperature, and comprises the following substeps:
- reduction of the diazonium salt in the presence of hypophosphorous acid in order to form a free radical,
- addition of the free radical to the carbonaceous material.

4. The process according to one of claims 1 or 2, wherein the step of forming a bond between the carbonaceous material (1) and the functionalizing molecules (5) via an azide group is carried out at around 135°C in an atmosphere comprising an inert gas.

5. The process according to claim 3, wherein the functionalizing molecule (5) is 1-azido-[2'-(2-methoxyethoxy)ethyl]ethane.

6. The process according to one of claims 1 to 5, wherein the solution (S) of monomers comprises acrylamide, N,N'-methylenebisacrylamide in presence of a radical polymerization initiator and an ionic liquid.

7. The process according to claim 5, wherein the radical initiator is ammonium persulfate.

8. The process according to one of claims 1 to 6, wherein the solution (S) of monomers also comprises a radical polymerization co-initiator, the radical polymerization co-initiator being N,N,N',N'-tetramethylethylenediamine.

9. A supercapacitor **characterized in that** it comprises an electrode-gel electrolyte assembly produced according to the process according to one of claims 1 to 8.
